# FASCICULE DE BREVET EUROPEEN

(11) **EP 2 305 050 B1**
(45) Date de publication et mention de la délivrance du brevet: **28.12.2011**
(21) Numéro de dépôt: 10181408.5
(22) Date de dépôt: 28.09.2010
(51) Int. Cl.: A23L 1/325

(54) **Procédé de fabrication de surimi et tranches de surimi obtenues par un tel procédé**
Verfahren zur Herstellung vom Surimi und Surimi Scheiben dadurch hergestellt
Process for the manufacturing of surimi and surimi slices so obtained

(30) Priorité: 30.09.2009 FR 0956814
(43) Date de publication de la demande: 06.04.2011
(73) Titulaire: Fleury Michon, 85700 Pouzauges (FR)
(72) Inventeur: Pineau, Yoann, 85210, LA REORTHE (FR)
(74) Mandataire: Bioret, Ludovic

(56) Documents cités:
- FR-A1- 2 692 111
- FR-A1- 2 914 151
- US-A- 4 919 959
- US-A- 5 028 445
- US-A- 5 145 701
- US-A1- 2004 101 603

## Description

### 1. Domaine de l'invention

Le domaine de l'invention est celui de l'agroalimentaire. Plus précisément, le domaine de l'invention est celui de la fabrication de produits alimentaires frais prêts à être consommés, en particulier à base de pâte de poisson, ou surimi.

### 2. Solutions de l'art antérieur

Certains produits alimentaires sont vendus prêts à être consommés, de façon à ce que le consommateur ait peu, voire aucune, préparation à effectuer.

Parmi ces produits, on connaît des produits à base de surimi de poisson qui peuvent se présenter sous différentes formes. Ainsi, le surimi peut être émietté ou râpé. Il peut également se présenter sous la forme de bâtonnets, de dés, de médaillons ou de tranches.

Le procédé de fabrication de certains de ces produits est relativement complexe et coûteux, et nécessite dans certains cas la mise en oeuvre d'un moulage afin d'obtenir la forme du produit souhaitée.

Un procédé de fabrication de tranches de surimi est par exemple décrit dans le document de brevet FR 2 692 111. Ces tranches de surimi, qui se présentent comme des tranches de jambon et dont l'épaisseur est de l'ordre de quelques millimètres (de 3 à 10 mm), sont généralement fabriquées par empilement de couches successives composées de bandes de surimi cuites en alternance avec des couches de prémêlée crue. Ces couches sont ensuite entourées par, ou emmaillotées dans, une ou plusieurs bandes de surimi cuit pour obtenir une pièce en forme de jambon. Un tel procédé est par conséquent relativement compliqué à mettre en oeuvre et n'est pas adapté à la fabrication de tranches plus fines, qui seraient souhaitables, en terme d'aspect visuel notamment.

En outre, la tenue de telles tranches n'est pas satisfaisante. En effet, il n'est pas rare que les tranches se délitent lorsqu'elles sont retirées de leur emballage de vente par l'utilisateur.

Il existe donc un besoin d'amélioration de l'offre des produits à base de surimi vendus dans le commerce, notamment sous la forme de tranches, afin de proposer au consommateur une offre plus variée et plus diversifiée.

Il existe en outre un besoin d'améliorer ces produits, afin de satisfaire à l'exigence d'une présentation, d'une tenue et d'un aspect visuel parfait, ou à tout le moins amélioré, du produit lorsqu'il est présenté dans une assiette par exemple.

Par ailleurs, il n'est pas possible à l'heure actuelle de proposer des tranches de surimi d'épaisseur fine, inférieure à 1, 5 mm par exemple, de façon industrielle.

### 3. Objectifs de l'invention

L'invention a notamment pour objectif de pallier ces inconvénients de l'art antérieur.

Plus précisément, un objectif de l'invention est de fournir une technique de fabrication d'un produit à base de surimi présentant un aspect et/ou goût nouveau.

De façon particulière, l'invention a pour objectif d'obtenir des tranches de surimi d'épaisseur fine.

Un autre objectif de l'invention est de fournir un tel produit présentant des propriétés mécaniques (et notamment qui ne se délitent pas) et organoleptiques adaptées à la vente au grand public.

Un objectif particulier de l'invention est de fournir un procédé permettant la fabrication industrielle de telles tranches de surimi, tout en conservant une consistance non caoutchouteuse.

Un autre objectif est de limiter le coût de fabrication de tels produits.

Plus précisément, un objectif de l'invention est de fournir un procédé de fabrication industrielle de tranches fines de surimi ayant une consistance permettant de limiter le risque de délitement des tranches quand elles sont manipulées.

### 4. Résumé de l'invention

Ces objectifs, ainsi que d'autres qui apparaîtront par la suite, sont atteints à l'aide d'un procédé de fabrication de surimi.

Selon l'invention, le surimi est obtenu à partir d'un mélange comprenant d'une part des éléments allongés et scarifiés obtenus à partir d'une première prémêlée, ou pâte de surimi, cuite et d'autre part une seconde prémêlée crue.

Le procédé selon l'invention permet ainsi de réaliser des tranches de surimi fines, dont l'aspect se rapproche des tranches de carpaccio de poisson ou de viande, ayant une épaisseur de l'ordre de 1 à 3 mm, par exemple 1,5 mm. Les tranches obtenues présentent une bonne tenue ou homogénéité pour permettre par exemple de les tenir avec les doigts sans qu'elles se cassent grâce au lien formé par le mélange de prémêlée de poisson crue et de surimi cuit, qui permet en outre d'éviter la présence de trous dans les tranches de surimi même si celles-ci présentent une épaisseur faible.

Le surimi cuit mélangé à la prémêlée de poisson crue se présente sous la forme d'éléments allongés et scarifiés obtenus à partir d'une prémêlée de poisson cuite.

Selon un mode de réalisation particulier, le procédé comprend les étapes suivantes :
- obtention d'une première composition de surimi sous la forme d'une première prémêlée crue, ou pâte de surimi ;
- cuisson de ladite première prémélée, pour obtenir une première prémélée précuite ;
- mise en forme de ladite première prémélée précuite pour obtenir des éléments allongés ;
- scarification desdits éléments allongés ;
- obtention d'une seconde composition de surimi sous la forme d'une seconde prémêlée crue, ou pâte de surimi ; et
- mélange desdits éléments allongés scarifiés avec ladite seconde prémêlée crue, pour obtenir un mélange homogène.

Avantageusement, un tel procédé est adapté pour former des tranches de surimi, et comprend les étapes suivantes :
- mise en forme dudit mélange;
- cuisson et refroidissement de ladite mise en forme, et
- découpe de ladite mise en forme en tranches d'épaisseur inférieures ou égales à 3 mm.

Dans un mode de réalisation particulier, les éléments allongés se présentent sous la forme de bandes.

Dans un autre mode de réalisation particulier, les éléments allongés se présentent sous la forme de bâtonnets.

Ainsi, le surimi cuit mélangé à la prémêlée de poisson crue peut prendre la forme de bâtonnets scarifiés ou de bandes scarifiées de 50 à 60 mm de largeur par exemple.

On envisage également de mélanger à la prémêlée de poisson crue à la fois des bandes de surimi et des bâtonnets de surimi, voir d'y intégrer également de la chair de poisson, de crabe et/ou des éléments de garniture ou d'assaisonnement (épices par exemple).

De manière avantageuse, l'étape de scarification est effectuée par des rouleaux comportant des dents de scarification.

Préférentiellement, l'étape de découpe de la mise en forme est effectuée par un trancheur à jambon.

Une telle étape est simple et peu coûteuse à mettre en oeuvre puisqu'on utilise un trancheur déjà existant.

Dans un mode de réalisation particulier, le mélange est mis en oeuvre de façon dynamique.

Le mélange des bâtonnets de surimi avec la prémêlée de poisson cru est ainsi effectué dans une cuve rotative qui est donc apte à tourner sur elle-même et qui comprend en outre un mélangeur rotatif, permettant ainsi l'obtention d'un mélange parfaitement homogène.

Dans un autre mode de réalisation particulier, la mise en forme du mélange est obtenue par extrusion.

De manière préférentielle, la première et la deuxième prémêlée crue sont composées de chair de poisson broyée, d'eau, de fécule, d'amidon, d'arômes, de sel et de colorants.

Dans une mise en oeuvre particulière de l'invention, les ingrédients et/ou les proportions des première et deuxième prémêlée crue sont différents.

Selon encore un autre mode de réalisation particulier, le procédé comprend en outre une étape de disposition des tranches dans un emballage comprenant au moins un contenant et éventuellement un film de protection plastique.

Avantageusement, le procédé comprend une étape de disposition d'au moins un élément de garniture et/ou d'assaisonnement sur les tranches.

Selon un autre mode de réalisation particulier, au moins un élément de garniture et/ou d'assaisonnement est incorporé au cours de l'étape de mélange d'éléments allongés scarifiés et de la seconde prémêlée crue.

On pourra éventuellement disposer au moins un élément de garniture et/ou d'assaisonnement sur des tranches dans lesquelles est déjà incorporé au moins un élément de garniture et/ou d'assaisonnement.

L'invention porte également sur une tranche de surimi obtenue par le procédé décrit ci-dessus, l'épaisseur de la tranche obtenue étant inférieure ou égale à 3 mm.

Le format des tranches de surimi élaborées selon le procédé de l'invention pourra être adapté. La tranche pourra ainsi présenter une forme circulaire, ovale, rectangulaire ou carrée, ou autre. Les outils de découpe et/ou la forme de la filière peuvent par exemple être configurés pour permettre d'obtenir de telles formes.

Le procédé de l'invention est particulièrement avantageux en ce qu'il permet d'offrir de nouveaux goûts, plus variés, au consommateur.

Dans le cadre de l'invention, on utilise une chaîne de fabrication déjà existante, à savoir celle de fabrication des bâtonnets de surimi. Par conséquent, la fabrication de tranches de surimi ne nécessite pas d'adaptation majeure des chaînes ni d'investissement lourd en nouvelles machines. Le coût de fabrication de tels produits s'avère donc relativement faible.

Les tranches de surimi peuvent être consommées seules ou avec un accompagnement. Il est ainsi possible de les consommer en y ajoutant une sauce, par exemple de la sauce mayonnaise, avant de les manger. Ces sauces permettent de varier les goûts de ces tranches de surimi.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une vue en perspective schématique d'un exemple de tranches de surimi obtenues à l'aide du procédé selon l'invention ;

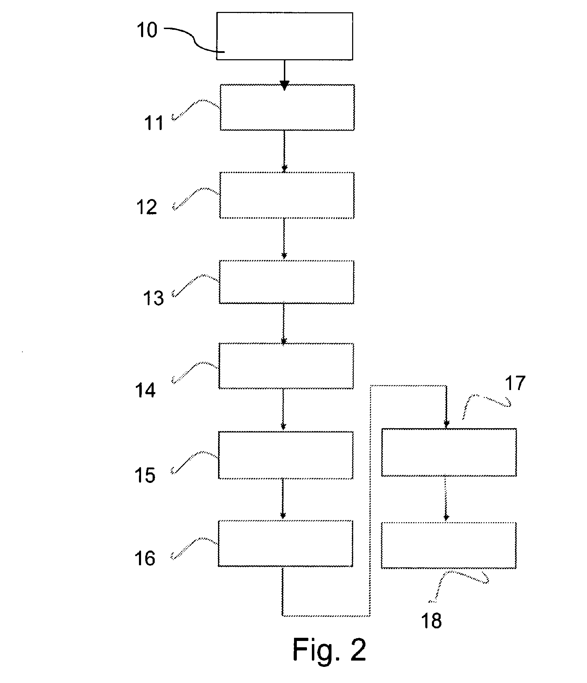

- la figure 2 est un schéma bloc illustrant les principales étapes du procédé de fabrication de telles tranches de surimi ;
- les figures 3a et 3b représentent de façon schématique le passage d'une bande de surimi dans des rouleaux scarificateurs, respectivement en vue de côté et en vue de coupe ; et
- la figure 4 est une vue schématique d'une partie d'une chaîne de fabrication de tranches de surimi.

### 6. Description détaillée de l'invention

### 6.1 Rappel du principe de l'invention

Le principe de l'invention consiste à fabriquer des tranches de surimi, dont l'aspect se rapproche des tranches de carpaccio de poisson ou de viande, en mélangeant de la matière cuite, composée par exemple de bâtonnets de surimi, et de la matière crue formée de prémêlée de poisson. Le mélange ainsi obtenu est extrudé puis coupé en tranches fines.

Le procédé selon l'invention permet ainsi de réaliser des tranches de surimi présentant une rigidité suffisante pour permettre par exemple de la retirer de son emballage sans qu'elle se délite. Ceci est rendu possible grâce au maillage formé par la matière crue mélangée à la matière cuite scarifiée.

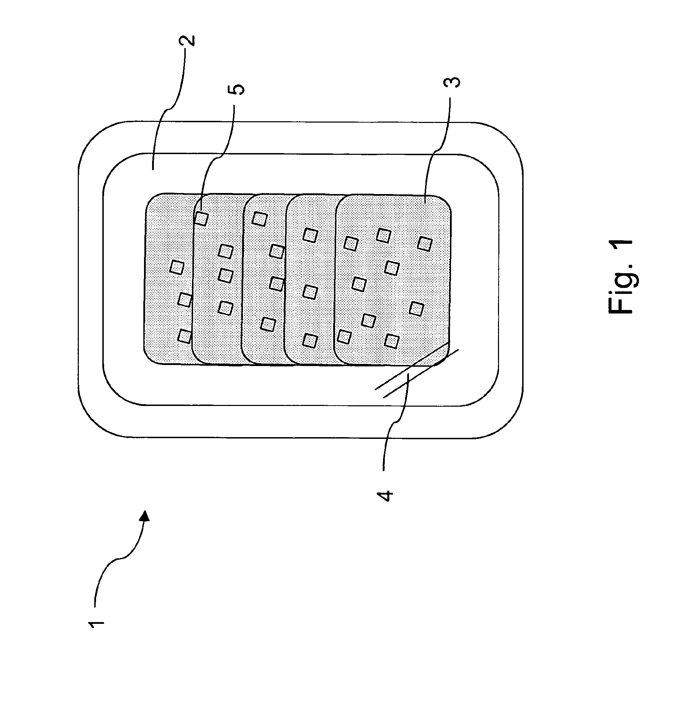

On a représenté sur la figure 1 un exemple d'un tel carpaccio de surimi 1, obtenu à l'aide du procédé conforme à l'invention, à proposer par exemple au rayon frais d'un magasin, prêt à être consommé seul ou accompagné d'une sauce.

Le carpaccio de surimi 1 comprend, dans cet exemple, des tranches de surimi 3 disposées dans un emballage, à la façon de tranches de jambon. L'emballage comprend un contenant 2 constitué d'une barquette en matière plastique (PVC ou PP par exemple) recouverte d'un film de protection plastique transparent 4 formant une barrière étanche entre les tranches de surimi 3 et l'air extérieur de manière à préserver les qualités organoleptiques des tranches de surimi. Le film 4 est dans cet exemple thermoscellé sur la barquette et peut être retiré totalement ou partiellement par le consommateur à l'aide d'une languette par exemple.

Dans cet exemple, le carpaccio de surimi 1 comporte au moins un élément de garniture 4 disposé sur les tranches de surimi 3. Dans une alternative du procédé de l'invention, on envisage la fabrication de tranches de surimi sans élément de garniture.

### 6.2 Exemple de procédé de fabrication de tranches de surimi selon l'invention

Dans cet exemple, le carpaccio de surimi 1 est obtenu conformément à un procédé de fabrication de l'invention illustré par le schéma en blocs de la figure 1.

Dans une première étape 10, on procède à la cuisson d'une prémêlée crue, ou pâte de surimi et on fabrique ensuite à l'étape 11 une bande de surimi à partir de cette prémêlée cuite.

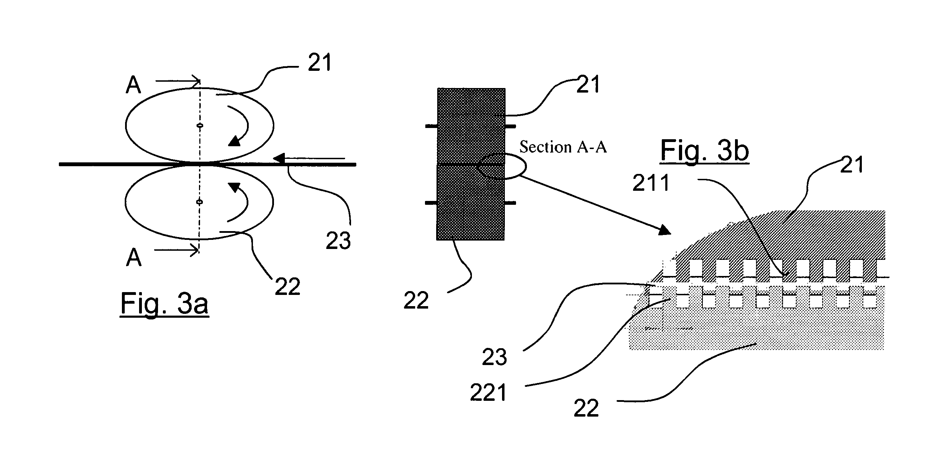

Dans une étape 12, on scarifie cette bande (cette étape sera détaillée en relation avec les figures 3a et 3b) et on l'enroule (étape 13) de manière à obtenir des bâtonnets de surimi.

Lors de l'étape suivante 14, on mélange les bâtonnets de surimi obtenus avec de la prémêlée crue, puis on met en forme ce mélange (étape 15) avant de découper la mise en forme obtenue en tranches (étape 16). Les tranches sont disposées dans des barquettes destinées à la vente (étape 17) et pasteurisées dans ces barquettes (étape 18).

Dans une alternative, l'étape 14 consiste à mélanger la prémêlée crue avec la bande scarifiée obtenue à l'étape 12.

### 6.3 Fabrication des bâtonnets de surimi

Le procédé de fabrication des bâtonnets de surimi est bien connu de l'homme du métier. Les bâtonnets de surimi sont fabriqués à partir d'une pâte, appelée surimi-base ou prémêlée, qui est ordinairement constituée de chair de poisson broyée (colin, lieu, merlan par exemple), d'eau, de fécule, d'amidon, d'arômes, de sel et de colorants.

La quantité ou la nature des constituants de la pâte peut varier sans que l'on sorte du cadre de la présente invention.

Cette pâte est classiquement étalée sur une plaque chauffante et précuite sous la forme d'une bande de 1,8 mm (±0,4 mm) d'épaisseur et de 140 mm (±20 mm) largeur par exemple.

La bande ainsi formée reste sur la plaque chauffante à une température de 80 à 105°C (± 1°C) pendant une durée de 10 à 60 secondes (± 2 secondes).

Eventuellement, par-dessus la pâte de couleur normale blanchâtre, une pâte ayant une coloration orange pourra être déposée sur une largeur prédéfinie, par exemple d'environ 4 cm, à proximité du bord de la bande. Une telle pâte colorée est destinée à se trouver à l'extérieur du bâtonnet, une fois que celui-ci est constitué.

La bande passe ensuite dans une chambre de cuisson à une température de 70 à 95°C (± 1 °C) et y reste pendant une durée de 20 à 30 secondes (± 2 secondes).

La bande de surimi est ensuite refroidie à température ambiante. Elle passe ainsi d'une température d'environ 80°C à une température d'environ 34°C (± 1°C).

Cette bande, une fois précuite, est refroidie et scarifiée avant d'être enroulée afin de former un bâtonnet de surimi. Un tel bâtonnet présente un diamètre d'environ 1 à 3 cm. Après l'enroulement, les bâtonnets subissent une nouvelle cuisson, lors d'une phase de pasteurisation.

Les figures 3a et 3b représentent de façon schématique le passage de la bande dans les rouleaux scarificateurs, respectivement en vue de côté et en vue de coupe détaillée. La bande de surimi 23 est scarifiée par un passage entre deux rouleaux scarificateurs 21 et 22. On peut y voir que les dents 211, 221 des rouleaux de scarification 21 et 22 pénètrent dans la bande de surimi 23 de façon profonde.

Ces rouleaux scarificateurs ont pour objectif de déformer la bande de surimi en y formant des encoches. Les encoches sont formées par des dents présentes sur les rouleaux de scarification, ou rouleau scarificateur. Comme le présente la figure 3b, les dents 211, 221 des deux rouleaux de scarification 21, 22 sont disposées de façon à ne pas être l'une en face de l'autre. Les dents de scarification 211, 221 ont une section rectangulaire d'une largeur d'environ 1 mm et deux dents consécutives sont séparées par un espace d'une largeur d'environ 1 mm. Ces dents permettent la scarification de la bande de surimi sur ses deux faces.

### 6.4 Mélange des bâtonnets de surimi et de prémêlée crue

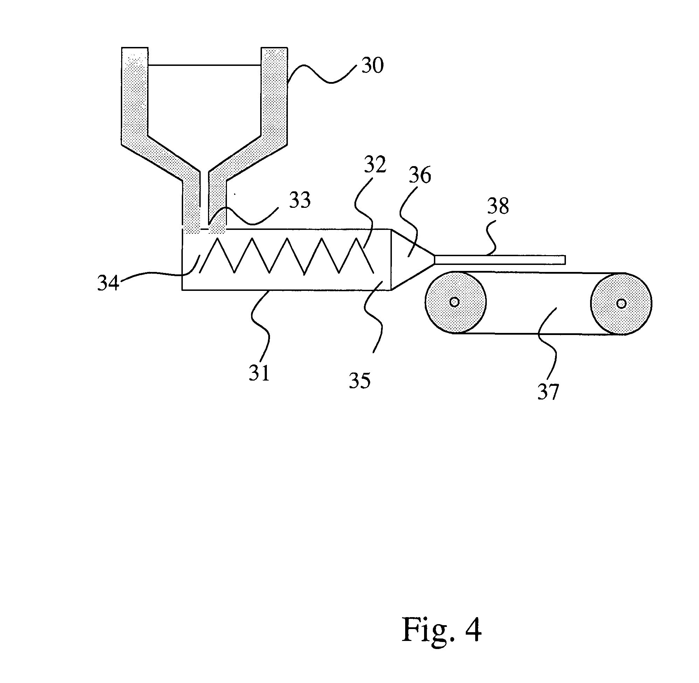

Comme illustré sur la figure 4, le procédé de fabrication des tranches de surimi selon l'invention comprend ensuite une étape de mélange des bâtonnets fabriqués selon le principe détaillé ci-dessus avec de la prémêlée de poisson cru.

Comme illustré sur la figure 4 que l'on va maintenant décrire, les outils pour la mise en oeuvre du procédé comprennent une cuve 30 rotative comportant une ouverture 33, un poussoir 31 à débit constant comprenant une vis sans fin 32 (ou un système à ailettes classique), l'ouverture 33 de la cuve étant placée dans une ouverture correspondante d'une extrémité 34 de la vis sans fin 32. L'autre extrémité 35 de la vis sans fin 32 est reliée à une chambre débouchant sur une filière 36. La filière 36 est disposée dans cet exemple légèrement au-dessus, notamment à environ 1 cm au-dessus d'un tapis 37 roulant.

Le mélange des bâtonnets de surimi avec la prémêlée de poisson cru est effectué dans la cuve 30 rotative qui est donc apte à tourner sur elle-même et qui comprend en outre un mélangeur rotatif (non représenté). Le mélange est effectué pendant une durée allant de 40s à 200s à 4°C. Cette étape de mélange permet d'éclater les bâtonnets en fibres (de 1 à 5 mm ± 0,5 mm) et d'obtenir un réseau de fibres cuites et de prémêlée crue homogène.

La masse de prémêlée crue contenue dans le mélange par rapport à la masse totale peut par exemple être comprise entre 5% à 60%.

Des essais ont permis de déterminer que pour obtenir une meilleure tenue de tranche, on utilisera de préférence 60% de bâtonnets pour 40% de prémêlée crue ou bien 70% de bâtonnets pour 30% de prémêlée crue.

Afin d'obtenir une tranche de couleur homogène, on pourra utiliser la même composition de prémêlée pour fabriquer les bâtonnets que celle utilisée dans le mélange cru-cuit, la liaison entre les fibres cuites et la prémêlée crue étant moins visible que si on utilisait deux compositions de prémêlée différentes. On pourra toutefois utiliser deux compositions de prémêlée différentes.

Le mélange est alors dirigée dans la vis sans fin 32 au travers de l'ouverture 33 de la cuve 30. Une aspiration formée par une pompe (non représentée) placée à l'entrée de la vis sans fin 32 permet d'entraîner le mélange homogène dans la vis sans fin. Le mélange est poussée par la vis sans fin 32 qui est mise en rotation de telle sorte que la mélange arrive dans la chambre puis, sous une légère pression comprise entre 0, 5 et 1 bar environ liée au rétrécissement de passage entre la chambre et la filière 36, passe au travers de la filière 36. La filière 36 présente une ouverture qui détermine la forme du rouleau 38. En d'autres termes, on extrude le mélange de la cuve 30 sous la forme d'un rouleau 38 dont le forme peut être circulaire ou non. Un tel rouleau ou boudin présente une longueur d'1 mètre environ, une section de 50 mm à 200 mm (± 30 mm) et une hauteur de 65 mm à 100 mm (± 5 mm). Plusieurs de ces boudins peuvent ensuite être cuits par lot (par « batch » en anglais à une température comprise entre 60°C et 80°C. Ils sont ensuite refroidis à 4°C et tranchés 24 heures après environ.

Dans une alternative, la cuisson des boudins est effectuée en flux (ou en continu) à l'aide d'un dispositif de cuisson rapide. Ils sont ensuite refroidis à l'aide d'un dispositif de refroidissement rapide, et tranchés.

Un outil de découpe (non représenté) tel qu'un couteau ou trancheur à jambon est agencé pour couper le rouleau 38 de manière à former de fines tranches d'environ 1 mm d'épaisseur dans cet exemple. Le procédé de l'invention permet également d'obtenir des tranches de surimi dont l'épaisseur est de l'ordre de 1 à 3mm. La filière peut bien évidemment comporter plusieurs têtes, identiques ou non, permettant la formation simultanée de plusieurs rouleaux. Les tranches ainsi formées sont recueillies et disposées dans un emballage tel que représenté sur la figure 1.

De préférence, un colorant (rouge par exemple) est pulvérisé par le biais d'une buse de pulvérisation sur le pourtour des boudins extrudés afin que le pourtour des tranches, une fois celles-ci découpées, soit coloré.

Outre la fabrication de tranches de surimi de couleur homogène (c'est-à-dire dont l'intérieur est sensiblement blanc), il est envisagé de fabriquer d'autres types de tranches, telles que des tranches comprenant une ondulation de couleur (rouge par exemple) à l'intérieur.

Pour ce faire, il est par exemple envisagé de faire déboucher un tube d'alimentation de pâte colorée dans la chambre débouchant sur la filière afin d'obtenir une telle ondulation (aspect marbré) des tranches de surimi.

On pourra également, ou alternativement, alimenter la chambre de compression avec des goûts et/ou des textures différentes afin d'obtenir des tranches de surimi ayant un aspect plus élaboré (cuisiné).

Le procédé peut comprendre une étape de coloration de la tranche consistant à pulvériser au moins un colorant sur les tranches obtenues.

Le procédé peut comprendre en outre l'étape consistant à disposer au moins un élément de garniture, découpé en morceau ou râpé éventuellement, sur la ou les tranches de surimi, l'élément de garniture étant choisi dans le groupe comprenant : les herbes notamment (ciboulette par exemple) ; les légumes notamment (poivrons par exemple) ; les sauces. Cette étape de garnissage des tranches de surimi est facultative, le produit final pouvant être non garni. Il est à noter que le ou les éléments de garniture peuvent être intégrée directement dans le mélange.

### 6.5 Conditionnement et pasteurisation des tranches de surimi

Après la découpe des tranches, celles-ci sont conditionnées dans des barquettes (comme illustré sur la figure 1) qui sont scellées (fermées de manière étanche) avec un film de protection plastique (éventuellement on injecte lors de la fermeture un gaz inerte à l'intérieur de l'emballage). Les barquettes sont ensuite traitées thermiquement suivant un barème de températures comprises entre 80 et 90° C pendant une durée comprise entre 60 et 90 min. afin de pasteuriser les tranches et d'achever leur cuisson. Après refroidissement, les barquettes sont alors prêtes à être vendues.

Les tranches élaborées selon le procédé de l'invention présentent une texture hétérogène et possèdent une rigidité suffisante pour permettre aux consommateurs de les retirer de leur emballage et de les tenir avec les doigts sans qu'elles se cassent/délitent. De plus, le procédé de l'invention permet l'obtention de tranches d'épaisseur suffisamment faible (3 mm au maximum) et évite la présence de trous procurant ainsi un certain raffinement au produit. La tranche peut présenter différentes formes notamment une forme ovale, ronde, rectangulaire ou autre. L'épaisseur de la tranche peut être comprise entre 0,8 mm et 1,5 mm, notamment entre 0,9 mm et 1,1 mm.

Le procédé de l'invention permet de fournir un produit à base de surimi, en l'occurrence des tranches de surimi, présentant un aspect et/ou goût nouveau ainsi que des propriétés mécaniques et organoleptiques adaptées à la vente au grand public. Les tranches obtenues présentent une consistance permettant de limiter le risque de délitement des tranches quand elles sont manipulées.

Le procédé de l'invention permet en outre de fournir un procédé permettant la fabrication industrielle de telles tranches de surimi, tout en limitant le coût de fabrication de tels produits.

### 6.6 Variantes

L'invention n'est bien sûr pas limitée aux exemples décrits.

Selon d'autres modes de réalisation de l'invention, la matière précuite destinée à être mélangée à la prémêlée crue peut être composée de surimi présenté sous d'autres formes qu'en bâtonnets, telles que des bandes de surimi scarifiées de 50 à 60 mm de large par exemple.

Bien entendu, selon un autre mode de réalisation, la composition de prémêlée mélangée aux bâtonnets (ou aux bandes scarifiées) peut être légèrement différente de celle qui est destinée à fabriquer les bâtonnets (ou les bandes). Ainsi, les ingrédients ou leurs proportions peuvent être différents.

## Revendications

1. Procédé de fabrication de surimi, **caractérisé en ce que** le surimi est obtenu à partir d'un mélange comprenant d'une part des éléments allongés et scarifiés obtenus à partir d'une première prémêlée, ou pâte de surimi, cuite et d'autre part une seconde prémêlée crue.

2. Procédé selon la revendication 1, **caractérisé en ce qu'**il comprend les étapes suivantes :
- obtention d'une première composition de surimi sous la forme d'une première prémêlée crue, ou pâte de surimi ;
- cuisson de ladite première prémélée, pour obtenir une première prémélée précuite ;
- mise en forme de ladite première prémélée précuite pour obtenir des éléments allongés ;
- scarification desdits éléments allongés ;
- obtention d'une seconde composition de surimi sous la forme d'une seconde prémêlée crue, ou pâte de surimi ; et
- mélange desdits éléments allongés scarifiés avec ladite seconde prémêlée crue, pour obtenir un mélange homogène.

3. Procédé selon la revendication 1 ou 2 pour former des tranches de surimi, **caractérisé en ce qu'**il comprend les étapes suivantes :
- mise en forme dudit mélange;
- cuisson et refroidissement de ladite mise en forme, et
- découpe de ladite mise en forme en tranches d'épaisseur inférieures ou égales à 3 mm.

4. Procédé selon l'une des revendications 1 à 3, **caractérisé en ce que** lesdits éléments allongés se présentent sous la forme de bandes.

5. Procédé selon l'une des revendications 1 à 3, **caractérisé en ce que** lesdits éléments allongés se présentent sous la forme de bâtonnets.

6. Procédé selon l'une des revendications 1 à 5, **caractérisé en ce que** ladite étape de scarification est effectuée par des rouleaux comportant des dents de scarification.

7. Procédé selon l'une des revendications 3 à 6, ladite étape de découpe de ladite mise en forme est effectuée par un trancheur à jambon.

8. Procédé selon l'une des revendications 1 à 7, **caractérisé en ce que** ledit mélange est mis en oeuvre de façon dynamique.

9. Procédé selon l'une des revendications 3 à 8, **caractérisé en ce que** ladite mise en forme dudit mélange est obtenue par extrusion.

10. Procédé selon l'une des revendications 1 à 9, **caractérisé en ce que** la première et la deuxième prémêlée crue sont composées de chair de poisson broyée, d'eau, de fécule, d'amidon, d'arômes, de sel et de colorants.

11. Procédé selon l'une des revendications 1 à 10 **caractérisé en ce que** les ingrédients et/ou les proportions des première et deuxième prémêlée crue sont différents.

12. Procédé selon l'une quelconque des revendications 3 à 11, **caractérisé en ce qu'**il comprend une étape de disposition des tranches dans un emballage comprenant au moins un contenant et éventuellement un film de protection plastique.

13. Procédé selon la revendication 12, **caractérisé en ce qu'**il comprend une étape de disposition d'au moins un élément de garniture et/ou d'assaisonnement sur les tranches.

14. Procédé selon l'une des revendications 1 à 13, **caractérisé en ce qu'**au moins un élément de garniture et/ou d'assaisonnement est incorporé au cours de ladite étape de mélange d'éléments allongés scarifiés et de ladite seconde prémêlée crue.

15. Tranche de surimi susceptible d'être obtenue par le procédé selon l'une quelconque des revendications précédentes, **caractérise, en ce que** l'épaisseur de la tranche est inférieure ou égale à 3 mm.

## Claims

1. Method for producing surimi, **characterised in that** the surimi is obtained from a mixture comprising, on the one hand, elongate and scarified elements which are obtained from a first premixture or surimi paste which is cooked and, on the other hand, a second raw premixture.

2. Method according to claim 1, **characterised in that** it comprises the following steps:
- obtaining a first surimi composition in the form of a first raw premixture, or surimi paste;
- cooking the first premixture in order to obtain a first precooked premixture;
- shaping the first precooked premixture in order to obtain elongate elements;
- scarifying the elongate elements;
- obtaining a second surimi composition in the form of a second raw premixture, or surimi paste; and
- mixing the scarified elongate elements with the second raw premixture in order to obtain a homogeneous mixture.

3. Method according to claim 1 or claim 2, for forming slices of surimi, **characterised in that** it comprises the following steps:
- shaping the mixture;
- cooking and cooling the formation, and
- cutting the formation into slices having thicknesses less than or equal to 3 mm.

4. Method according to any one of claims 1 to 3, **characterised in that** the elongate elements are in the form of strips.

5. Method according to any one of claims 1 to 3, **characterised in that** the elongate elements are in the form of batons.

6. Method according to any one of claims 1 to 5, **characterised in that** the scarification step is carried out by means of rollers which comprise scarification teeth.

7. Method according to any one of claims 3 to 6, **characterised in that** the step for cutting the formation is carried out by means of a meat slicer.

8. Method according to any one of claims 1 to 7, **characterised in that** the mixture is used in a dynamic manner.

9. Method according to any one of claims 3 to 8, **characterised in that** the formation of the mixture is obtained by means of extrusion.

10. Method according to any one of claims 1 to 9, **characterised in that** the first and the second raw premixtures are composed of ground fish flesh, water, cornflour, starch, flavours, salt and colouring agents.

11. Method according to any one of claims 1 to 10, **characterised in that** the ingredients and/or the proportions of the first and second raw premixtures are different.

12. Method according to any one of claims 3 to 11, **characterised in that** it comprises a step for arranging the slices in a packaging which comprises at least one container and optionally a protective plastics film.

13. Method according to claim 12, **characterised in that** it comprises a step for arranging at least one element of garnish and/or seasoning on the slices.

14. Method according to any one of claims 1 to 13, **characterised in that** at least one element of garnish and/or seasoning is incorporated during the step for mixing scarified elongate elements and the second raw premixture.

15. Slice of surimi which is capable of being obtained using the method according to any one of the preceding claims, **characterised in that** the thickness of the slice is less than or equal to 3 mm.

## Patentansprüche

1. Verfahren zum Herstellen von Surimi, **dadurch gekennzeichnet, dass** das Surimi aus einer Mischung erhalten wird, die einerseits längliche und mit Einritzungen versehene Elemente, welche aus einer ersten gekochten Vormischung oder Surimipaste erhalten wurden und andererseits eine zweite rohe Vormischung umfassen.

2. Verfahren gemäß Anspruch 1, **dadurch gekennzeichnet, dass** es die folgenden Schritte umfasst :
• Erhalten einer ersten Surimi-Zusammensetzung in Form einer ersten rohen Vormischung oder Surimipaste ;
• Kochen der ersten Vormischung, um eine erste vorgekochte Vormischung zu erhalten ;
• in Form bringen der ersten vorgekochten Vormischung, um längliche Elemente zu erhalten ;
• Einbringen von Einritzungen in die länglichen Elemente ;
• Erhalten einer zweiten Surimi-Zusammensetzung in Form einer rohen Vormischung oder Surimipaste ; und
• Mischen der länglichen eingeritzten Elementemit der zweiten rohen Vormischung, um eine homogene Mischung zu erhalten.

3. Verfahren gemäß Anspruch 1 oder Anspruch 2 zum Bilden von Surimischeiben, **dadurch gekennzeichnet, dass** es die folgenden Schritte umfasst :
• in Form bringen der Mischung ;
• Kochen und Abkühlen der Formmasse und
• Schneiden der Formmasse in Scheiben mit einer Dicke von weniger als oder gleich 3 mm.

4. Verfahren gemäß einem der Ansprüche 1 bis 3, **dadurch gekennzeichnet, dass** die länglichen Elemente in Form von Streifen vorliegen.

5. Verfahren gemäß einem der Ansprüche 1 bis 3, **dadurch gekennzeichnet, dass** die länglichen Elemente in Form von Stäbchen vorliegen.

6. Verfahren gemäß einem der Ansprüche 1 bis 5, **dadurch gekennzeichnet, dass** das Einbringen der Einritzungen mittels Rollen, die Einritzzähne aufweisen, erfolgt.

7. Verfahren gemäß einem der Ansprüche 3 bis 6, **dadurch gekennzeichnet, dass** das Schneiden der Formmasse mittels eines Schinkenschneiders erfolgt.

8. Verfahren gemäß einem der Ansprüche 1 bis 7, **dadurch gekennzeichnet, dass** die Mischung dynamisch hergestellt wird.

9. Verfahren gemäß einem der Ansprüche 3 bis 8, **dadurch gekennzeichnet, dass** das in Form bringen der Mischung durch Extrusion erfolgt.

10. Verfahren gemäß einem der Ansprüche 1 bis 9, **dadurch gekennzeichnet, dass** die erste und die zweite rohe Vormischung aus gemahlenem Fischfleisch, Wasser, Speisestärke, Stärke, Aromen, Salz und Farbstoffen bestehen.

11. Verfahren gemäß einem der Ansprüche 1 bis 10, **dadurch gekennzeichnet, dass** die Zutaten und/oder die Proportionen in der ersten und der zweiten rohen Vormischung unterschiedlich sind.

12. Verfahren gemäß einem der Ansprüche 3 bis 11, **dadurch gekennzeichnet, dass** es einen Schritt des Anordnens der Scheiben in einer Verpackung umfasst, die mindestens einen Behälter und gegebenenfalls einen Schutzfilm aus Kunststoff umfasst.

13. Verfahren gemäß Anspruch 12, **dadurch gekennzeichnet, dass** es einen Schritt des Anordnens mindestens eines Garniturelementes und/oder einer Würze auf den Scheiben umfasst.

14. Verfahren gemäß einem der Ansprüche 1 bis 3, **dadurch gekennzeichnet, dass** mindestens ein Ganiturelement und/oder eine Würze während des Mischens der eingeritzten länglichen Elemente und der zweiten rohen Vormischung eingebracht wird.

15. Surimischeibe, die durch ein Verfahren gemäß einem der vorhergehenden Ansprüche erhalten werden kann, **dadurch gekennzeichnet, dass** die Dicke der Scheibe weniger als als oder gleich 3 mm beträgt.
